# EUROPEAN PATENT SPECIFICATION

(11) **EP 2 822 382 B1**
(45) Date of publication and mention of the grant of the patent: **19.12.2018**
(21) Application number: 12752681.2
(22) Date of filing: 05.03.2012
(51) Int. Cl.: A01N 25/34, A01N 59/02, A01N 59/18, A01N 25/02, A01N 59/06, A01N 59/26, A01N 55/08, A01N 59/14, C05G 1/00, A01N 55/10, A01N 59/16, C05D 9/02, C05G 3/00

(54) **FOLIAR FERTILISER**
BLATTDÜNGER
ENGRAIS FOLIAIRE

(43) Date of publication of application: 14.01.2015
(73) Proprietor: The University Of Queensland, St.Lucia, Queensland 4072 (AU)
(72) Inventor: HUANG, Longbin, Brisbane, Queensland 4072 (AU); NGUYEN, Anh Van, Brookfield, Queensland 4069 (AU); RUDOLPH, Victor, Brisbane, Queensland 4072 (AU); XU, Gordon, St Lucia, Queensland 4072 (AU)
(74) Representative: Schiweck Weinzierl Koch Patentanwälte Partnerschaft mbB
(86) International application number: PCT/AU2012/000227
(87) International publication number: WO 2012/116417

(56) References cited:
- WO-A1-03/059070
- WO-A1-2009/127256
- WO-A1-2013/118131
- WO-A1-2013/121244
- DE-A1-102007 020 242
- GB-A- 2 396 556
- US-A1- 2006 014 645
- US-A1- 2007 009 809
- US-A1- 2010 160 161

## Description

### FIELD OF THE INVENTION

The present invention relates to a foliar fertiliser. Particularly, the present invention relates to a foliar fertiliser having improved morphology and physicochemical characteristics.

### BACKGROUND OF THE INVENTION

Plants require a range of nutrients, both macro- and micro-, to ensure healthy growth. In certain environments, abiotic constraints preclude the availability of sufficient amounts of these essential nutrients for root uptake via addition of fertiliser to the soil. This can be due to inadequate levels of soluble forms of mineral nutrients in soil solution, water deficit in the top soil, an alkaline soil pH, high soil carbonate content, low organic matter content in soil and other key soil factors which limit nutrient availability.

Grain and seed crops as well as fruit trees require rapid and intensive nutrient supply of large amounts of mineral nutrients into flowers, young seeds, pods and fruits, particularly during the reproductive growth stage, which may coincide with declined root vigour and unfavourable soil (e.g. water deficit) and climate conditions (e.g. high temperature), leading to untimely and inadequate nutrient supply to meet this rapid demand. In addition, continual removal of micronutrients in seeds, grains and fruits can deplete the available pool of nutrients in soils. Under these circumstances, the application of foliar fertilisers provides a precise, timely and effective supply of nutrients for plant reproductive organs and at much lower required application rates than soil fertilisers. This can result in not only quick correction or prevention of nutrient disorders and yield losses but also an improvement in crop quality.

Under such conditions it has been found that foliar fertilisation provides great benefits in terms of producing improved yields of healthy plants and crops. Foliar fertilisation is the application of liquid fertiliser directly onto aboveground plant parts, rather than to the soil surrounding the plant. The fertiliser is drawn into the plant by penetration through either or both of the stomatal openings and cuticle, into the leaf epidermis.

A typical foliar fertiliser may be either a solution of a soluble chemical compound in water or a dispersion/suspension of a non-soluble fertilising compound in water.

The use of a soluble fertilising compound facilitates rapid penetration of nutrient ions into the plant and therefore provides for efficient correction of nutritional deficiencies. However, the use of a highly soluble fertilising compound can lead to phytotoxicity and so it can only be applied in very low concentrations through repetitive sprays (for example 2-4 sprays from late vegetative growth to reproduction stage). This necessitates the labour intensive use of a low dosage fertiliser composition over multiple applications to supply the required amount of nutrients for healthy growth.

Suspension foliar fertilisers are, generally, inorganic mineral compounds, such as oxides and hydroxides, which are finely ground and have relatively low water solubility. Due to their low solubility they can be applied to plants at higher concentrations without any risk of phytotoxicity. The presence of the low solubility fertilising compound on the leaf surface acts as a slow release source meaning the plant can be supplied with appropriate nutrients over a relatively long period of time after a one time application process.

In practice it has been found that the advantages of suspension foliar fertilisers are tempered by issues of poor distribution on the leaf surface as well as availability of the low solubility fertilising compound sometimes being inadequate. Further, since the fertilising compound, after application, is left behind as a fine solid on the leaf surface it may be prone to being washed or blown off that surface by the elements.

Fertilizer compositions suitable for foliar application comprising a nanoparticulate fertilizing composition are known from US 20010/160161 A1, WO 03/059070 A1, DE 10 2007 020242 A1 and WO 2009/127256 A1.

There is a need for an improved foliar fertilising composition to facilitate efficient and reliable supply of desired nutrients to a plant.

### OBJECT OF THE INVENTION

The object of the invention is to overcome or at least alleviate one or more of the above problems or to at least provide for a useful commercial choice.

### SUMMARY OF THE INVENTION

In one broad form the invention resides in a nanoparticulate foliar fertilising compound wherein the nanoparticles have a contact surface area to total surface area ratio greater than 1:4.

Preferably, the contact surface area to total surface area ratio is greater than 1:3, more preferably approaching 1:2.

Suitably, the nanoparticles have a planar or sheet-like morphology.

Preferably, the fertilising compound comprises one or more nitrate groups.

The fertilising compound has an overall positive surface charge or potential in water.

The invention resides in a foliar fertiliser composition comprising a fertilising compound having an overall positive surface charge or potential at neutral pH.

The surface charge or potential may be measured by microelectrophoresis.

Preferably, the foliar fertiliser composition further comprises a liquid carrier.

The liquid carrier may be an aqueous liquid carrier.

Preferably, the liquid carrier is water, is substantially water or consists of water.

Alternatively, the liquid carrier may be water-based but containing one or more suitable surfactants or stability additives.

Suitably, the fertilising compound is present in the form of particles having at least one dimension less than about 1000 nm, preferably less than about 500 nm, more preferably less than about 250 nm, even more preferably less than about 150 nm, most preferably less than about 100 nm.

The fertilising compound is present in the form of nanoparticles, more preferably, in the form of nanocrystals.

The nanocrystals of the fertilising compound have a high contact surface area to total surface area ratio.

The ratio of the contact area of a nanoparticle on the leaf surface to the volume of the nanoparticles may be defined as being at least 1, preferably more than 10, more preferably more than 20, more preferably more than 50, most preferably more than 100.

Preferably, the fertilising compound nanocrystals have a sheet-like or platelet shape.

Suitably, the fertilising compound is dispersed in the liquid carrier.

Preferably, the solubility of the fertilising compound in water is between 0.1-100 mg/L for micronutrient elements and 100 - 1000 mg/L for macronutrient elements. For zinc and manganese a suitable range is 5-50 mg/L; for copper 1-5 mg/L, for molybdenum 0.1 - 1 mg/L and for calcium and magnesium 100-500 mg/L.

The fertilising compound may contain a plant nutrient element selected from the group consisting of zinc, copper, iron, manganese, boron, molybdenum, chlorine, phosphorus, potassium, calcium, magnesium and sulphur.

Preferably, the fertilising compound has one or more groups which form a water-soluble salt with a cationic fertilising element including nitrate, chloride, sulphate, phosphate and acetate, but not limited thereto.

The fertilising compound may be a zinc containing compound having at least one nitrate group.

Preferably, the fertilising compound is a zinc hydroxide nitrate compound.

Suitably, the fertilising compound has the formula Zn₅(OH)₈(NO3)₂.2H₂O.

In a second aspect, the invention resides in a foliar fertiliser composition comprising a nanoparticulate fertilising compound having a sheet-like morphology.

Preferably, the nanoparticulate fertilising compound is a nanocrystalline fertiliser.

The foliar fertiliser composition of the second aspect employing the fertilising compound and liquid carrier as described for the first aspect.

In a third aspect, the invention resides in a method of delivering a nutrient to a plant including the steps of:
(a) providing a foliar fertiliser composition comprising a nanoparticulate fertilising compound dispersed in a liquid carrier; and
(b) applying the foliar fertiliser composition to the plant,
wherein, the nanoparticles have a contact surface area to total surface area ratio greater than 1:4.

Preferably, the contact surface area to total surface area ratio is approaching 1:2.

Preferably, the nanoparticulate fertilising compound is a nanocrystalline fertilising compound.

Suitably, the nanoparticles have a planar or sheet-like morphology

The nanoparticulate fertilising compound has an overall positive surface charge or potential in water.

The method of the third aspect may be performed using the fertilising compound and liquid carrier as described for the first and/or aspect.

The invention resides in a method of delivering a nutrient to a plant including the steps of:
(a) providing a foliar fertiliser composition comprising a fertilising compound dispersed in a liquid carrier; and
(b) applying the foliar fertiliser composition to the plant,
wherein, the fertilising compound has an overall positive surface charge or potential in water.

The method of the fourth aspect may be performed using the fertilising compound and liquid carrier as described for the first and/or aspect.

In a fifth aspect, the invention resides in a method of formulating a foliar fertiliser composition including the steps of:
(a) providing a nanocrystalline fertilising compound having a contact surface area to total surface area ratio greater than 1:4; and
(b) dispersing the fertilising compound in a liquid carrier.

The method of the fifth aspect may be performed using the fertilising compound and liquid carrier as described for the first and/or aspect.

Further features of the present invention will become apparent from the following detailed description.

Throughout this specification, unless the context requires otherwise, the words "comprise", "comprises" and "comprising" will be understood to imply the inclusion of a stated integer or group of integers but not the exclusion of any other integer or group of integers.

### BRIEF DESCRIPTION OF THE FIGURES

In order that the invention may be readily understood and put into practical effect, preferred embodiments will now be described by way of example with reference to the accompanying figures wherein:
FIG 1A shows a series of XRD patterns for three zinc containing fertilising compounds;
FIG 1B shows a series of FTIR spectra for three zinc containing fertilising compounds;
FIG 2 shows two scanning electron micrograph images of sample A (zinc hydroxide nitrate) as a fertilising compound of the present invention;
FIG 3 is a scanning electron micrograph image of sample B (zinc oxide);
FIG 4 is a scanning electron micrograph image of sample C (zinc oxide); and
FIG 5 is a series of diagrammatic representations of the contact area of different morphologies of fertilising compounds.

### DETAILED DESCRIPTION OF THE INVENTION

The present inventors have provided fertilising nanocrystals demonstrating reliable and controlled dissolution of nutrients into the water film on a leaf surface. Nanocrystalline compounds containing essential nutrients have been synthesized to have effective physical and chemical characteristics, including a high contact surface area/ total surface area ratio for maximal surface contact, suitable chemical composition and charge balance to achieve a net positive charge, and reactive surface edges for cation exchange to release nutrient cationic ions in the water film on leaf surfaces. The nanocrystals are the source of nutrient and slowly dissolve to release nutrient cations to maintain a concentration of between about 1-100 mg/L nutrient ion in the water film on leaf surfaces for penetration into leaf cells.

The present invention is predicated, at least in part, on the development of a foliar fertilising compound which takes the form of nanocrystal platelets or sheets and has an overall positive surface charge or potential in water. The morphology of the nanocrystal platelets combined with the overall positive surface charge or potential has been observed to provide surprisingly large gains in terms of the efficiency of delivery of a nutrient element to a plant through its leaf surface. Although not wishing to bound by any particular theory it is postulated that the platelet shape and nanosized dimensions of the nanocrystal provide for a high overall surface area to volume ratio, meaning the compound is somewhat better placed to dissolve and become bioavailable to the plant, and, particularly, a high contact surface area to total surface area ratio leads to reduced mobility of the compound on the leaf and a much improved solubility/release profile while the overall positive surface charge or potential results in good dispersion over and strong adherence onto the leaf surface thereby reducing post-application loss. The fertilising compound, due to its chemical composition, has a suitable solubility range in water such that it can be delivered to the plant leaves in sufficient quantities to form a slow release system without demonstrating phytotoxicity.

Although the invention will be demonstrated herein with particular reference to a zinc hydroxide nitrate fertilising compound it is believed that the principles discussed are equally applicable to a range of nutritional element-containing compounds capable of providing suitable nanoparticulate morphology and an overall positive surface charge or potential.

The term "foliar fertiliser", as used herein, refers to a composition suitable for application onto the leaves of a plant which, upon dissolution, is capable of delivering a desired nutrient to the plant. The foliar fertilisers described comprise a partially soluble fertilising compound suspended or otherwise dispersed or contained within an aqueous solution.

The term "contact surface area", as used herein, relates to the surface area of the fertiliser particle which is in either direct contact with or is immediately adjacent to, the leaf surface. For a variety of shapes this is likely to be the surface with the greatest individual surface area as this will be a more stable 'landing' position for the particle to take when it locates on the leaf surface. For example, for the platelets or sheet-like nanoparticles described herein the contact surface area is one of the two large surfaces as opposed to a 'side' or 'edge' of the platelet or sheet.

The terms "dispersed" or "dispersion", as used herein, refers to the presence of a fertilising compound within an aqueous solution forming a foliar fertiliser composition. The fertilising compound will have limited solubility in the aqueous solution such that solid particles thereof will be suspended or able to be suspended therein.

Zinc is an essential micronutrient which is often applied as a component of a foliar fertiliser composition in the form of ground zinc oxide. Although generally effective it has been found that it can be difficult to achieve an even distribution of this compound on the leaf surface and, coupled with its rather low solubility and problems with its being easily dislodged from the leaf surface by wind and rain can mean that inadequate amounts of zinc are entering the plant.

The present inventors postulated that optimisation of the morphology and charge characteristics of a zinc-containing fertilising compound could result in improved delivery, retention on the leaf surface and availability of the zinc to a plant leaf surface.

Three samples of a zinc-containing fertilising compound were synthesised and characterised as set out in the examples section. Sample A was shown to be zinc hydroxide nitrate (Zn₅(OH)₈(NO3)₂) which typically exists in the dihydrate form as Zn₅(OH)₈(NO3)₂.2H₂O. Samples B and C were both zinc oxide but the different synthetic conditions employed in their production resulted in nanoparticles with different morphology characteristics.

Zinc hydroxide nitrate, Sample A, was synthesised by a variation on a known synthetic method, as described in the examples section. Samples B and C were synthesised in a relatively similar manner but with key variations as set out in the example section. The particular process conditions used produced zinc-containing fertilising compounds with corresponding morphologies as discussed below.

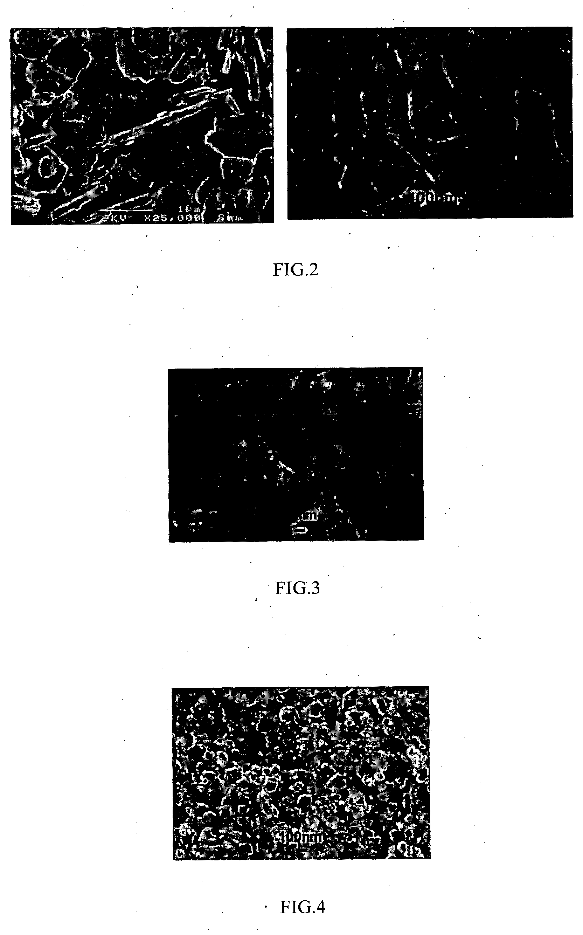

FIG 2 shows two scanning electron micrograph (SEM) images of sample A in which the platelet or sheet-like morphology of the material can be clearly seen. The thickness of the platelets are between about 50-100 nm while the lateral dimension was generally in the range of 0.2-1 µm. The zinc hydroxide nitrate synthesised can thus accurately be described as having formed a nanomaterial or being nanoparticulate. Particularly, the images shown in FIG 2 can be said to show nanocrystals.

The platelet shape of the zinc hydroxide nitrate nanocrystals means that they have a very high leaf contact surface area to total surface area ratio. This has been found to provide surprisingly large gains in efficacy over larger amorphous particles and even morphologies such as nanocubes, nanorods and the like as, firstly, a greater proportion of the zinc hydroxide nitrate is exposed to the environment which will solubilise the material and allow it to enter the plant leaf and, secondly, more of the material is in physical contact with the leaf surface. This second point results in the zinc being made available to the plant in a more efficient manner and also means the zinc hydroxide nitrate nanoparticles are less likely to be mobile on the leaf surface and therefore inadvertently displaced, as can happen with shapes having a lower contact surface area to total surface area ratio and greater resulting mobility, such as spherical particles.

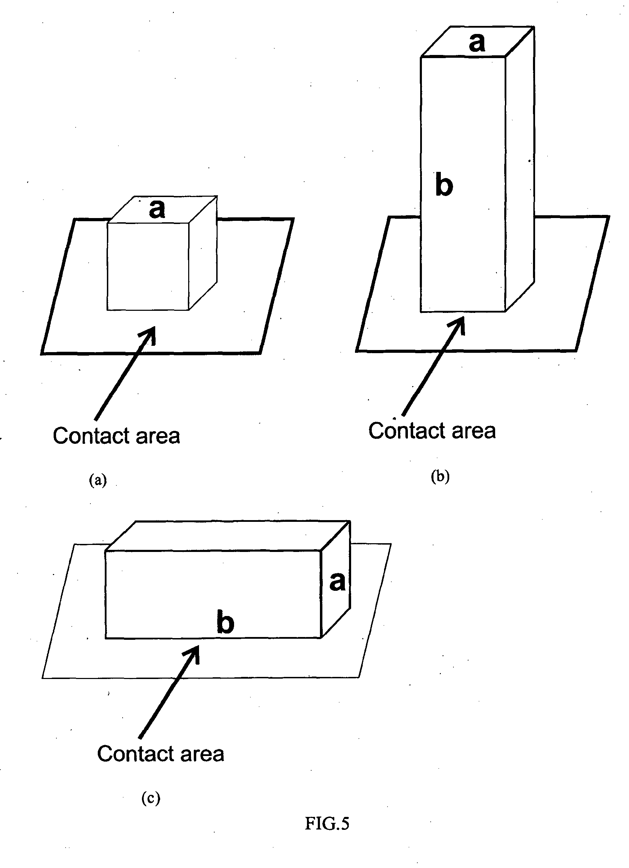

In general terms, the smaller the size of a crystal with a particular shape the larger the specific surface area (or surface area to volume ratio) and thus the greater the likelihood of a larger relative contact area between crystal and leaf. In relation to the nanocrystals provided by the present invention this can be further considered by the ratio of the contact surface area (i.e. the area of crystal in contact with or immediately adjacent the leaf surface) to the total surface area of the crystal. By way of example, for a sphere the theoretical contact area approaches zero, as it is a point contact, and so the ratio is close to zero. For a cube the ratio is 1/6, for a very long square prism the ratio is close to 1/4 and for a very thin sheet, the ratio is close to 1/2. Thus for a nanocrystal of sheet-like or platelet morphology, as seen for sample A, more surface area is effectively available as the leaf contact area. This is shown in FIG 5.

FIG 3 shows that Sample B produced a typical zinc oxide crystal shape, nanorods, with a hexagonal cross section. The side length of the hexagonal cross section was about 100 nm while the length of the rods was in the range of 200-400 nm.

FIG 4 is a SEM of the particles of Sample C and it can be seen that the crystal size was approximately 50 - 100 nm, on average, without noticeable morphological features. These crystals are aggregated into particulates of a hundred to a few hundred nanometres in size.

The uptake of each of Samples A, B and C along with a commercial zinc-containing foliar fertiliser (Activist 30% Zn in which the zinc is present as zinc oxide) was tested on capsicum plant leaves, as set out in the examples section. The results of these tests are summarised in Table 1 wherein the parameter LSD 0.05 refers to Fisher's least significant difference analysis with 5% limitation.

**Table 1: Foliar zinc uptake from various samples**

| Fertilisers | Applied Zn (µg) | Zn uptake (µg/leaf) | % applied dose |
|---|---|---|---|
| Sample A | 288 | 26.85 | 9.32 |
| Sample B | 300 | 16.49 | 5.50 |
| Sample C | 300 | 15.67 | 5.22 |
| Activist 30% Zn | 268 | 9.84 | 3.67 |
| LSD_{0.05} | | 6.95 | 2.38 |

The results show that the zinc hydroxide nitrate (Sample A) is significantly more effective at delivering zinc into the plant leaf than either of Sample B or C or the commercially available treatment. In terms of the percentage of the applied zinc dosage to reach the interior of the leaf, Sample A was more efficacious than the commercial treatment in making bioavailable almost three times as much zinc for a similar total applied amount.

Samples B and C produced relatively similar results to each other and both were improved over the commercial treatment, although by an amount just under the determined limit of statistical significance. The better delivery of zinc into the leaf, as observed for Samples B and C by comparison to the commercial treatment, is believed to be due purely to the smaller, nanoscale size of their particles. The Activist 30% Zn contains zinc oxide, just as Samples B and C do, but the smaller particle sizes of B and C result in a higher overall bulk solubility and so more of the zinc is available to the leaf.

The success of the zinc hydroxide nitrate as a fertilising compound can be attributed to a number of features resulting from its particle morphology and/or physicochemical characteristics. These features include, but are not limited to, the platelet/sheet-like shape of the nanocrystals providing for a high surface area to volume ratio, high contact area to total surface area ratio and low mobility on the leaf surface; the nanoscale dimensions of the platelet improving solubility of the material; the surface charge profile or zeta potential of the zinc hydroxide nitrate; and, the chemical composition of the zinc hydroxide nitrate itself assisting in providing an optimal solubility profile.

In one general embodiment of the invention the fertilising compound is present in a foliar fertiliser composition in the form of particles having at least one dimension less than about 1000 nm, preferably less than about 500 nm, more preferably less than about 250 nm, even more preferably less than about 150 nm, most preferably less than about 100 nm. These nanoscale dimensions allow the fertilising compound, within a foliar fertiliser composition, to be dispersed evenly, in appropriate amounts, across the leaf surface.

Although the platelet morphology described herein is optimal it will be appreciated that other nanoparticulate shapes may be suitable so long as they provide a sufficiently large contact surface area to total surface area ratio attain a reasonable rate of solubilisation, and therefore release, of the bound zinc. Preferably, the contact surface area to total surface area ratio of the nanoparticulate shapes will be greater than 1:6, more preferably greater than 1:4, even more preferably greater than 1:3 and still more preferably approaching 1:2.

As discussed, it is preferred that the fertilising compound exists in a form which has a high contact surface area to total surface area ratio to ensure good contact over a maximal area of the leaf surface and to increase the amount of compound exposed to solubilising conditions. As an alternative to the ratio above this may be described as being a contact surface area to volume ratio of the fertilising compound particles of at least 1/µm, preferably at least 10/µm, more preferably at least 20/µm, even more preferably at least 50/µm and most preferably at least 100/µm. This ratio can be calculated as shown below for certain crystal shapes relating to those shown in FIG 5 a-c.

### FIG 5(a) Cube: Contact surface area (Sc) = a²

Volume (V) = a³
therefore, Contact surface area to volume ratio: R (Sc/V) = 1/a
If a = 0.01 µm (10 nm), then R (Sc/V) = 100/ µm
If a = 0.1 µm (100 nm), then R (Sc/V) = 10/ µm
If a = 1 µm (1000 nm), then R (Sc/V) = 1/ µm
If a = 10 µm, then R (Sc/V) = 0.1/ µm

### FIG 5(b) Square prism (standing):

Contact surface area (Sc) = a²
Volume (V) = a²b
therefore, Contact surface area to volume ratio: R (Sc/V) = 1/b, depending on b (height or thickness)
Suppose a = 1 µm (1000 nm),
If b = 0.01 µm (10 nm), then R (Sc/V) = 100/ µm (sheet)
If b = 0.1 µm (100 nm), then R (Sc/V) = 10/ µm (plate)
If b = 1 µm (1000 nm), then R (Sc/V) = 1/ µm
If b = 10 µm, then R (Sc/V) = 0.1/ µm (rod)
Note that a cylinder would give approximately the same result.

### FIG 5(c) Square prism (laying down):

Contact surface area (Sc) = ab
Volume (V) = a²b
therefore, Contact surface area to volume ratio: R (Sc/V) = 1/a (depending on a scale)
Suppose b = 1 µm (1000 nm),
If a = 0.01 µm (10 nm), then R (Sc/V) = 100/ µm (rod)
If a = 0.1 µm (100 nm), then R (Sc/V) = 10/ µm (rod)
If a = 1 µm (1000 nm), then R (Sc/V) = 1/ µm
If a = 10 µm, then R (Sc/V) = 0.1/ µm (plate standing)

The contact area to volume and/or total surface area ratio of a nanoparticle with platelet or sheet-like morphology is thus much higher than other common morphologies, providing distinct advantages when used as foliar fertilisers which have not previously been considered.

The surface charge of a leaf is predominantly negative and this is a factor which is also not considered or addressed by prior art foliar suspension fertilisers. Most fertilisers employ metal oxides having a negative charge, at neutral pH, which does not provide for optimal dispersion onto and contact with the leaf surface. Zinc oxide nanoparticulate fertilising compounds display a negative surface charge in water at neutral pH. They also use surfactants within the composition which can interfere with the surface charge matching between fertilising compound and leaf surface. Preferably, nonionic or cationic surfactants are employed in the present formulations to maintain or enhance the positive charge of the suspension for improved adhesion with negatively charged leaf surfaces.

The zinc hydroxide nitrate, synthesised as Sample A, has a positive surface charge or potential in water which can provide distinct advantages in terms of improving the dispersion of the compound evenly over the leaf surface as well as the contact between compound and leaf. The overall positive surface charge or potential means the nanocrystalline platelets of zinc hydroxide nitrate are attracted to the leaf surface and held in place so that they are less likely to be washed off or otherwise displaced after application. The positive surface charge is the charge presented on the platelet flat outer face and, while the edges of the platelets may display some negative charge, due to the size of this face the overall surface charge is overwhelmingly positive.

The solubility of the fertilising compound in water is also a component of the present invention. As already discussed, this is influenced to some extent by the nanoscale size of the particles as well as the high surface area (and contact area) to volume/ total surface area ratios achieved. However, the chemical composition of the fertilising compound is also key. Preferably, the fertilising compound has one or more nitrate, chloride, sulphate, phosphate, acetate or like water-soluble salt forming groups which aid in improving the solubility of the compound in comparison to a compound such as zinc oxide or zinc hydroxide.

Preferably, the solubility of the fertilising compound in water is between 0.1-100 mg/L for micronutrient elements and 100 - 1000 mg/L for macronutrient elements. For zinc and manganese a suitable range is 5-50 mg/L; for copper 1-5 mg/L, for molybdenum 0.1 - 1 mg/L and for calcium and magnesium 100-500 mg/L.

The fertilising compound will be delivered to the plant in the form of a foliar fertiliser comprising the fertilising compound dispersed in a liquid carrier. Preferably, the liquid carrier is an aqueous carrier. The liquid carrier may be water-based but containing one or more suitable surfactants or additives for stability or like formulation purposes. A suitable stability additive is carboxymethyl cellulose(CMC) to form a particularly preferred foliar fertiliser composition.

Although the discussion herein has focused on the synthesis of zinc-containing fertilising compounds it will be appreciated that the principles of forming a nanoscale compound with high contact surface area to total surface area ratio, suitable solubility and overall positive surface charge or potential can be applied to nano or submicron particles of a range of other essential elements. In one embodiment, the fertilising compound may contain a plant nutrient element selected from the group consisting of zinc, copper, iron, manganese, boron, molybdenum, chlorine, phosphorus, potassium, calcium, magnesium and sulphur.

### EXAMPLES

### Sample preparation

Three zinc-containing samples were prepared as herein described. Sample A was synthesized by following a modified precipitation method. A 3.75M solution of Zn(NO₃)₂ (75 mmol in 20 ml deionized water) was poured with 0.75 M NaOH (37.5 mmol in 50 mL deionized water), i.e. giving a OH/Zn ratio of 0.5, with mechanical stirring at a rate of 500 rpm at room temperature. The stirring was continued for a period from 10 min to 24 hr. The precipitate was then collected by filtration, washed with deionized water and dried at 65 °C.

Sample B was synthesized using a similar process as for Sample A but the OH/Zn ratio was changed to 1.6 (8/5). In brief, a 1.88M solution of Zn(NO₃)₂ (18.8 mmol in 10 ml deionized water) was poured with 0.75 M NaOH (30.0 mmol in 40 mL deionized water), i.e. giving a OH/Zn ratio of 1.6, under mechanical stirring at a rate of 500 rpm at 50 °C. The stirring was continued for a period of 1 to 24 hr. The precipitate was then collected by filtration, washed with deionized water and dried at 65 °C.

Sample C was synthesized via the same process as that of sample B but with the concentration of zinc nitrate reduced. A 0.47 M solution of Zn(NO₃)₂ (23.5 mmol in 50 ml deionized water) was poured with 0.75 M NaOH (37.5 mmol in 50 ml deionized water), i.e. giving a OH/Zn ratio of 1.6, under mechanical stirring at a rate of 500 rpm at 50 °C. The stirring was continued for a period from 1 to 24 hr. The precipitate was then collected by filtration, washed with deionized water and dried at 65 °C.

### Sample characterisation

Powder X-ray diffraction (XRD) was performed using a Bruker D8 Advance equipped with a Copper target scintillation detector and graphite monochromator with Cu Kα (λ = 1.54 Å) radiation. The 2θ angle was scanned from 5° to 70° and the scanning rate was 3°/min. The Fourier transform infrared (FTIR) spectra were collected in the range of 4000-400 cm⁻¹ via a Fourier Transform Infrared - Attenuated Total Reflectance technique in a Nicolet 6700 FTIR spectrometer manufactured by Thermo Electron Corporation. SEM images were recorded in a JEOL JSM-6300 to investigate the morphology and particle sizes of the produced samples.

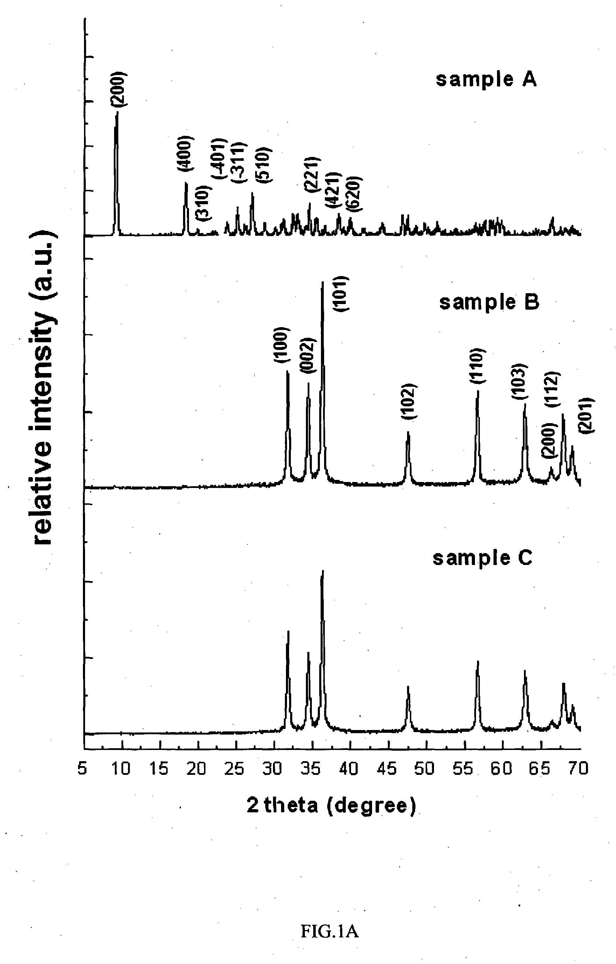

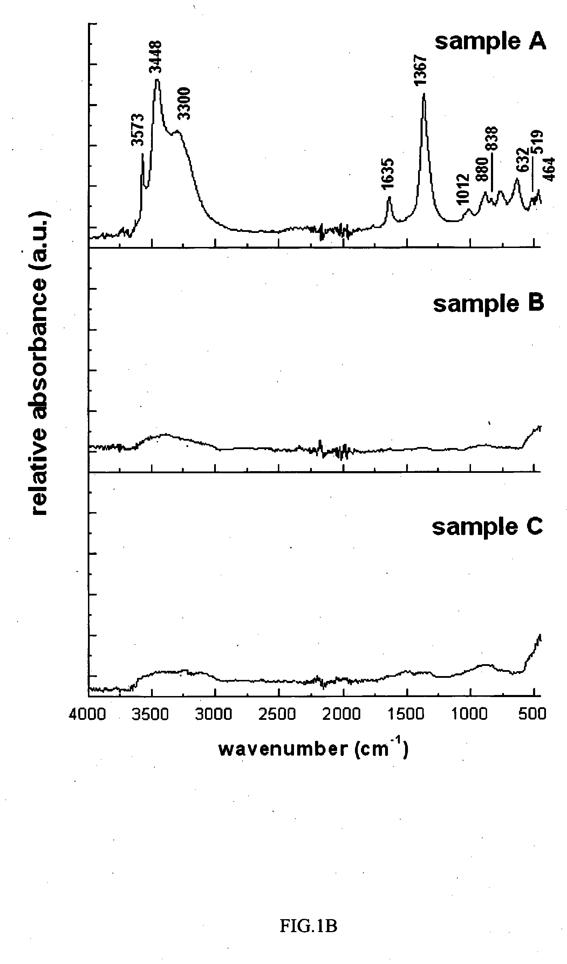

The powder X-ray diffraction pattern of sample A, shown in FIG 1 A uppermost pattern, was identified by comparison with the internationally accepted database of powder diffraction patterns, JCPDS (Joint Committee on Powder Diffraction Standards now administered by the International Centre for Diffraction Data) card 24-1460 as being zinc hydroxide nitrate according to the characteristic diffraction peaks that are marked with the Miller (hkl) indices, as seen in FIG 1. The observed interlayer spacing for sample A was around 0.97 nm, which is in good agreement with literature reports (Hussein et al., 2009).

The FTIR spectrum of sample A, as seen in FIG 1B uppermost spectra, further confirmed the compound as being zinc hydroxide nitrate. The sharp peak seen at 3573 cm⁻¹ is attributed to the stretching vibration of the O-H bond associated with the zinc ion and is to be expected as zinc hydroxide nitrate contains a relatively high number of hydroxide groups. The broad band at 3448 cm⁻¹, as well as the peak at 1635 cm⁻¹, indicated the presence of water molecules in the interlayers and/or adsorbed on the molecule's surface. The shoulder seen at about 3300 cm⁻¹ is attributed to O-H groups (from Zn-OH and H₂O) hydrogen-bonded with nitrate or water molecules. The intensive peak around 1367 cm⁻¹, the weak peaks around 1012 cm⁻¹, and the weak peak at 838 cm⁻¹ characterise various vibration modes of the nitrate group.

According to the literature, a shoulder around 1430 cm⁻¹, relating to nitrate anions grafted to the hydroxide layer, should be observable, however, in this instance the shoulder was not significant probably indicating the nitrate group keeps its C₃ᵥ symmetry. The band at 632 cm⁻¹ and the weak peak at 519 cm⁻¹ were due to bending of the Zn-O-H bond and the vibration of the Zn-O bond resulted in a peak at 464 cm⁻¹. In this manner the X-ray diffraction patterns and FTIR spectra allowed Sample A to be unequivocally identified as zinc hydroxide nitrate with a molecular formula of Zn₅(OH)₈(NO₃)₂·2H₂O.

Samples B and C gave a powder X-ray diffraction pattern, shown in FIG A middle and bottom respectively, identical to the JCPDS card 36-1451 indicating the presence of wurtzite-structure zinc oxide. In the FTIR spectra of samples B and C, shown in FIG 1B middle and bottom respectively, weak and broad bands at around 3372 cm⁻¹ were observed which could be attributed to O-H stretching of adsorbed water molecules. Vibration of the Zn-O bonds was observed at around 500 cm⁻¹.

### Foliar uptake of samples A, B and C

Capsicum (*Capsicum annume* L.cv. Giant Bell) plants were grown in a glasshouse with the temperature controlled at 25/20°C (day/night). One week after germination each capsicum seedling was transferred into a 3 L pot filled with potting mix. Basal nutrients were supplied to each pot by adding 5 g of Osmocote slow release fertiliser (NPK 16:9:12 plus micronutrient; Scotts Professional) per pot.

Leaves from the 6-week-old plants were then cut at the base of their petioles. Petioles were immersed in Eppendorf tubes filled with a nutrient solution containing all basal nutrients, except zinc. The tubes were inserted in holes at the bottom of Petri dishes. The leaf blades rested on moist filter paper to create approximately 100% relative humidity during the incubation process.

The as prepared leaf surfaces were then exposed to one of four different zinc sources being Samples A, B and C, described above, and a sample for comparison purposes. A commercial product, Activist 30% Zn (Agrichem Co. Ltd.), was applied as the comparison sample and some leaves were not exposed to any zinc-containing sample to thereby act as a control. Samples A, B and C were dispersed in deionised water to make homogeneous suspensions with the aid of ultrasonic treatment and employing the same surfactant as is found in Activist 30% Zn to ensure consistency between samples.

The three synthesised zinc sample suspensions and the Activist 30% Zn were applied on separate adaxial leaf surfaces using a micropipette with droplet volume of approximately 5 µL. The calculated loading amount of fertilising compound on each leaf surface is displayed in Table 1. After application of the zinc-containing samples the leaves were transferred into an incubator and incubated for three days with the temperature set at 25/20°C (day/night). The light intensity on each shelf was greater than 170 µmol/m²/s (TRISL model, Thermoline). The leaves were then harvested and all residual zinc compound on the leaf surface washed off by wiping the treated areas using clean moist cotton buds and then rinsing three times with triple deionised water. The leaves were then oven-dried at 68 °C for 48 h before digestion with concentrated HNO₃ and H₂O₂ using a microwave digestor (Milestone Inc). Foliar uptake of zinc was determined by comparison of the difference between the zinc concentration found in treated leaves and untreated leaves. Table 1 shows the results of the uptake study.

The present invention provides for a foliar fertilising compound demonstrating a number of improved properties. The morphology of the fertilising compound particles is such that the surface area in contact with the leaf is maximised and the sheet-like nano-sized particles provide for limited mobility when applied to the leaf and allow good solubilisation. The chemical composition of the compound is such that it sits within an optimal solubility range in water preventing rapid dissolution which may result in phytotoxicity but achieving a higher rate of dissolution than zinc oxides. This ensures an appropriate rate of controlled release of the desired element thereby providing the plant with an immediate but long lasting supply of nutrient with a single application. Further, consideration of the role charge can play in assisting with distribution of the fertilising compound as well as limiting the likelihood of its displacement from the leaf surface after application has lead to production of a fertilising compound with an overall positive surface charge or potential in water. This interacts with the net negative charge presented by the leaf surface to give the advantages discussed.

## Claims

1. A fertiliser composition suitable for foliar application comprising a nanoparticulate fertilising compound with low water solubility and an overall positive surface charge or potential in water at neutral pH, wherein the nanoparticles have a contact surface area to total surface area ratio greater than 1:4, optionally greater than 1:3, optionally between 1:3 to 1:2.

2. The composition of claim 1 wherein the fertilising compound has at least one dimension less than about 500 nm, optionally less than about 250 nm or less than about 100 nm.

3. The composition of claim 1 or claim 2 wherein the nanoparticles are nanocrystals having a sheet-like or platelet morphology.

4. The composition of any one of the preceding claims wherein the ratio of the contact area of a nanoparticle available for contact with a leaf surface to the volume of the nanoparticle is at least 1, optionally at least 10, 50 or 100.

5. The composition of any one of the proceeding claims wherein the fertilising compound contains a plant nutrient element selected from the group consisting of zinc, copper, iron, manganese, boron, molybdenum, chlorine, phosphorus, potassium, calcium, magnesium and sulphur.

6. The composition of any one of the proceeding claims wherein the fertilising compound comprises one or more groups capable of forming a water-soluble salt with a cationic nutrient element, selected from the group consisting of nitrate, chloride, sulphate, phosphate and acetate.

7. The composition of claim 6 wherein the fertilising compound is a zinc hydroxide nitrate, preferably Zn₅(OH)₈(NO3)₂.2H₂O.

8. The composition of any one of the proceeding claims wherein the fertiliser composition further comprises an aqueous liquid carrier.

9. The composition of claim 8 wherein the fertilising compound has a low solubility in the aqueous liquid carrier.

10. The composition of claim 9 wherein the fertilising compound is dispersed or suspended in the liquid carrier.

11. A method of delivering a nutrient to a plant including the steps of:
(a) providing a fertiliser composition suitable for foliar application comprising a nanoparticulate fertilising compound with low water solubility and an overall positive surface charge or potential in water at neutral pH dispersed in a liquid carrier; and
(b) applying the fertiliser composition to the plant,
wherein, the nanoparticles have a contact surface area to total surface area ratio greater than 1:4, optionally greater than 1:3, optionally between 1:3 to 1:2.

12. The method of claim 11 wherein the fertilising compound is a nanocrystalline fertilising compound.

13. The method of claim 12 wherein the nanocrystals have a platelet or sheet-like morphology.

14. The composition of any one of claims 1-10, or the method of any one of claims 11-13, wherein the solubility of the fertilising compound in water is between 0.1 and 1000 mg/L.

15. The composition or method of claim 14, wherein the nanoparticle fertilising compound contains a plant micronutrient element, and the solubility of the fertilising compound is between 0.1 and 100 mg/L; or the nanoparticle fertilising compound contains a plant macronutrient element, and the solubility of the fertilising compound is between 100 and 1000 mg/L.

## Patentansprüche

1. Düngemittelzusammensetzung, die für die Blattapplikation geeignet ist, umfassend eine nanopartikuläre Düngemittelverbindung mit geringer Wasserlöslichkeit und einer insgesamt positiven Oberflächenladung oder -potential in Wasser bei neutralem pH-Wert, wobei die Nanopartikel ein Verhältnis von Kontaktoberfläche zu Gesamtoberfläche haben, das größer als 1:4, gegebenenfalls größer als 1:3 ist, gegebenenfalls zwischen 1:3 und 1:2 liegt.

2. Zusammensetzung nach Anspruch 1, wobei die Düngemittelverbindung mindestens eine Abmessung von weniger als etwa 500 nm, gegebenenfalls weniger als ca. 250 nm oder weniger als ca. 100 nm aufweist.

3. Zusammensetzung nach Anspruch 1 oder Anspruch 2, wobei es sich bei den Nanopartikeln um Nanokristalle mit einer blattartigen oder plättchenförmigen Morphologie handelt.

4. Zusammensetzung nach einem der vorhergehenden Ansprüche, wobei das Verhältnis der Kontaktoberfläche eines Nanopartikels, die für den Kontakt mit einer Blattoberfläche verfügbar ist, zum Volumen des Nanopartikels mindestens 1, gegebenenfalls mindestens 10, 50 oder 100 beträgt.

5. Zusammensetzung nach einem der vorhergehenden Ansprüche, wobei die Düngemittelverbindung ein Pflanzennährstoffelement enthält, ausgewählt aus der Gruppe bestehend aus Zink, Kupfer, Eisen, Mangan, Bor, Molybdän, Chlor, Phosphor, Kalium, Kalzium, Magnesium und Schwefel.

6. Zusammensetzung nach einem der vorhergehenden Ansprüche, wobei die Düngemittelverbindung eine oder mehrere Gruppen umfasst, die in der Lage sind, ein wasserlösliches Salz mit einem kationischen Nährstoffelement zu bilden, ausgewählt aus der Gruppe bestehend aus Nitrat, Chlorid, Sulfat, Phosphat und Acetat.

7. Zusammensetzung nach Anspruch 6, wobei die Düngemittelverbindung ein Zinkhydroxidnitrat ist, vorzugsweise Zn₅(OH)₈(NO3)₂•2H₂0.

8. Zusammensetzung nach einem der vorhergehenden Ansprüche, wobei die Düngemittelzusammensetzung weiterhin einen wässrigen flüssigen Träger umfasst.

9. Zusammensetzung nach Anspruch 8, wobei die Düngemittelverbindung eine geringe Löslichkeit in dem wässrigen flüssigen Träger aufweist.

10. Zusammensetzung nach Anspruch 9, wobei die Düngemittelverbindung in dem flüssigen Träger dispergiert oder suspendiert ist.

11. Verfahren zur Abgabe eines Nährstoffs an eine Pflanze, die Schritte umfassend:
(a) Bereitstellen einer für die Blattapplikation geeigneten Düngemittelzusammensetzung, umfassend eine nanopartikuläre Düngemittelverbindung mit geringer Wasserlöslichkeit und einer insgesamt positiven Oberflächenladung oder -potential in Wasser bei neutralem pH-Wert, dispergiert in einem flüssigen Träger; und
(b) Aufbringen der Düngemittelzusammensetzung auf die Pflanze,
wobei die Nanopartikel ein Verhältnis von Kontaktoberfläche zu Gesamtoberfläche haben, das größer als 1:4, gegebenenfalls größer als 1:3 ist, gegebenenfalls zwischen 1:3 und 1:2 liegt.

12. Verfahren nach Anspruch 11, wobei die Düngemittelverbindung eine nanokristalline Düngemittelverbindung ist.

13. Verfahren nach Anspruch 12, wobei die Nanokristalle eine plättchenförmige oder blattartige Morphologie aufweisen.

14. Zusammensetzung nach einem der Ansprüche 1-10 oder Verfahren nach einem der Ansprüche 11-13, wobei die Löslichkeit der Düngemittelverbindung in Wasser zwischen 0,1 und 1000 mg/l liegt.

15. Zusammensetzung oder Verfahren nach Anspruch 14, wobei die Nanopartikel-Düngemittelverbindung ein pflanzliches Mikronährstoffelement enthält und die Löslichkeit der Düngemittelverbindung zwischen 0,1 und 100 mg/l liegt; oder die Nanopartikel-Düngemittelverbindung ein pflanzliches Makronährstoffelement enthält und die Löslichkeit der Düngemittelverbindung zwischen 100 und 1000 mg/l liegt.

## Revendications

1. Composition d'engrais appropriée pour une application foliaire comprenant un composé d'engrais nanoparticulaire à faible hydrosolubilité et charge surfacique ou potentiel global positif dans l'eau à pH neutre, sachant que les nanoparticules présentent un rapport de la superficie de contact à la superficie totale supérieur à 1:4, facultativement supérieur à 1:3, facultativement compris entre 1:3 et 1:2.

2. La composition de la revendication 1, sachant que le composé d'engrais présente au moins une dimension inférieure à environ 500 nm, facultativement inférieure à environ 250 nm ou inférieure à environ 100 nm.

3. La composition de la revendication 1 ou de la revendication 2, sachant que les nanoparticules sont des nanocristaux ayant une morphologie de type feuille ou de plaquette.

4. La composition de l'une quelconque des revendications précédentes, sachant que le rapport de la superficie de contact d'une nanoparticule disponible pour le contact avec une surface foliaire au volume de la nanoparticule est d'au moins 1, facultativement d'au moins 10, 50 ou 100.

5. La composition de l'une quelconque des revendications précédentes, sachant que le composé d'engrais contient un élément de nutriment de plante sélectionné dans le groupe constitué par le zinc, le cuivre, le fer, le manganèse, le bore, le molybdène, le chlore, le phosphore, le potassium, le calcium, le magnésium et le soufre.

6. La composition de l'une quelconque des revendications précédentes, sachant que le composé d'engrais comprend un ou plusieurs groupes capables de former un sel hydrosoluble avec un élément de nutriment cationique, sélectionné dans le groupe constitué par le nitrate, le chlorure, le sulfate, le phosphate et l'acétate.

7. La composition de la revendication 6, sachant que le composé d'engrais est un nitrate d'hydroxyde de zinc, de préférence Zn₅(OH)₈(NO3)₂•2H₂O.

8. La composition de l'une quelconque des revendications précédentes, sachant que la composition d'engrais comprend en outre un support liquide aqueux.

9. La composition de la revendication 8, sachant que le composé d'engrais présente une faible solubilité dans le support liquide aqueux.

10. La composition de la revendication 9, sachant que le composé d'engrais est dispersé ou suspendu dans le support liquide.

11. Procédé d'apport d'un nutriment à une plante incluant les étapes de :
(a) fourniture d'une composition d'engrais appropriée pour une application foliaire comprenant un composé d'engrais nanoparticulaire à faible hydrosolubilité et charge surfacique ou potentiel global positif dans l'eau à pH neutre, dispersé dans un support liquide ; et
(b) application de la composition d'engrais à la plante,
sachant que les nanoparticules ont un rapport de la superficie de contact à la superficie totale supérieur à 1:4, facultativement supérieur à 1:3, facultativement compris entre 1:3 et 1:2.

12. Le procédé de la revendication 11, sachant que le composé d'engrais est un composé d'engrais nanocristallin.

13. Le procédé de la revendication 12, sachant que les nanocristaux ont une morphologie de type feuille ou de plaquette.

14. La composition de l'une quelconque des revendications 1 à 10, ou le procédé de l'une quelconque des revendications 11 à 13, sachant que l'hydrosolubilité du composé d'engrais est comprise entre 0,1 et 1000 mg/L.

15. La composition ou le procédé de la revendication 14, sachant que le composé d'engrais à nanoparticules contient un élément de micronutriment de plante, et la solubilité du composé d'engrais est comprise entre 0,1 et 100 mg/L ; ou le composé d'engrais à nanoparticules contient un élément de macronutriment de plante, et la solubilité du composé d'engrais est comprise entre 100 et 1000 mg/L.
